(19) Europäisches Patentamt
European Patent Office
Office européen des brevets

(11) Veröffentlichungsnummer : **0 072 416**
**B1**

(12) # EUROPÄISCHE PATENTSCHRIFT

(45) Veröffentlichungstag der Patentschrift : **03.04.85**

(51) Int. Cl.⁴ : **C 01 C 3/02**

(21) Anmeldenummer : **82105800.5**

(22) Anmeldetag : **30.06.82**

(54) **Verfahren zur Herstellung von Cyanwasserstoff.**

(30) Priorität : **19.08.81 DE 3132723**

(43) Veröffentlichungstag der Anmeldung : **23.02.83 Patentblatt 83/08**

(45) Bekanntmachung des Hinweises auf die Patenterteilung : **03.04.85 Patentblatt 85/14**

(84) Benannte Vertragsstaaten : **AT BE CH DE FR GB IT LI NL**

(56) Entgegenhaltungen :
**EP-A- 0 048 800**
**DE-A- 2 913 925**
**DE-B- 2 350 212**
**DE-C- 1 143 497**
**GB-A- 718 112**
**GB-A- 913 836**

(73) Patentinhaber : **Degussa Aktiengesellschaft**
**Weissfrauenstrasse 9**
**D-6000 Frankfurt am Main 1 (DE)**

(72) Erfinder : **Voigt, Carl, Dr., Dipl.-Chem.**
**Im Heegholz 5**
**D-6458 Rodenbach 2 (DE)**
Erfinder : **Kleinschmit, Peter, Dr., Dipl.-Chem.**
**Wildaustrasse 19**
**D-6450 Hanau 9 (DE)**

**EP 0 072 416 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

1. Es ist bekannt, dass die Herstellung von Cyanwasserstoff durch Umsetzung von vor allem Methan mit Ammoniak durchgeführt wird, und zwar entweder in Gegenwart von Sauerstoff nach dem sogenannten Andrussow-Verfahren, oder ohne Sauerstoff nach dem sogenannten BMA-Verfahren.

Voraussetzung zur großtechnischen Durchführung dieser beiden Prozesse bei Verwendung von Methan als Kohlenwasserstoff ist eine ausreichende Versorgung mit Methan, siehe ULLMANN, Enzyklopädie der technischen Chemie, 4. Auflage, Band 9, Seite 658/659.

Damit begrenzt sich aber die Wahl möglicher Standorte für die Herstellungsanlagen.

Wenn auch beim Shawinigan- und BMA-Verfahren Propan bzw. leicht transportierbare Flüssiggase eingesetzt werden können — s. ULLMANN, loc. cit. und DE-A-29 13 925 — so ist es doch wünschenswert, eine andere wesentliche Rohstoffquelle ebenfalls für das BMA-Verfahren bzw. Andrussow-Verfahren nutzbar zu machen.

Es handelt sich um das Methanol. Methanol gilt als einer der wichtigsten Chemie-Rohstoffe und liegt mengenmässig hinter Ammoniak und Äthylen an dritter Stelle der Welproduktion. Bei Einsetzen von Methanol könnte Cyanwasserstoff aus zwei Grundstoffen, die in Großem Maße vorhanden und leicht zugänglich sind, gewonnen werden.

Man war daher schon seit längerer Zeit bemüht, Cyanwasserstoff unter Einsetzung von Methanol herzustellen.

So wird in der DE-C-11 43 497 ein Verfahren beschrieben, bei dem ein Gemisch von Methanol und Ammoniak ohne Zusatz von Sauerstoff in Gegenwart von u. a. Platinkatalysatoren bei 500-1 200 °C umgesetzt wird.

Die dabei erreichten Ausbeuten lagen aber nur bei maximal 31 % und waren daher technisch uninteressant.

Es wurde weiter versucht, durch Zumischung von Sauerstoff, ähnlich wie beim Andrussow-Verfahren, durch interne Verbrennung des bei der Umsetzung gebildeten Wasserstoffs, zusätzliche Reaktionswärme zu gewinnen und damit die endotherme Bildung von Blausäure zu fördern.

In der Tat führte ein solches Verfahren, bei dem ein Molybdänmischkatalysator eingesetzt wird, zu Cyanwasserstoffausbeuten über 80 % — siehe DE-B-23 50 212. Bei diesem Verfahren setzt die thermodynamische Gleichgewichtslage aber voraus, dass die auf der Produktgasseite nebeneinander vorliegenden Moleküle Cyanwasserstoff und Wasser in der Verseifungsreaktion :

$$HCN + H_2O \rightarrow CO + NH_3$$

nicht miteinander reagieren.

Aus diesem Grunde muss eine Verdünnung mit Inertgas, wie Stickstoff, erfolgen ; dies macht aber derartige Verfahren bei ihrer technischen Realisierung außerordentlich aufwendig. Durch die großen Volumenströme nach der Reaktion sind entsprechend groß dimensionierte Anlagen zur Aufarbeitung des Produktgasgemisches nötig.

Die DE-B-23 50 212 enthält daher auch nur Laboratoriumsbeispiele.

Ähnliche Verfahren, die sich im wesentlichen nur durch die Wahl des Katalysators unterscheiden, arbeiten nach dem gleichen Prinzip, d. h. mit Verdünnungsgasen in großen Mengen, siehe z. B. die japanischen Offenlegungschriften 7971799, 7969597, 78149899**, oder auch GB-A-718 112 und 913 836.

Es traten also auch hier bei allen diesen Verfahren die gleichen Schwierigkeiten bei der technischen Durchführung auf wie bei der DE-B-23 50 212.

Nach dem Stand der Technik war es infolgedessen unwahrscheinlich, dass man Methanol zur Herstellung von Cyanwasserstoff in einem technisch durchführbaren Verfahren einsetzen konnte.

Aufgabe der Erfindung ist ein Verfahren, bei dem Methanol als Kohlenstoffquelle eingesetzt wird, und das sich ohne aufwendige Massnahmen technisch durchführen lässt.

Es wurde nun gefunden, dass sich diese Aufgabe lösen lässt, wenn man die Herstellung von Cyanwasserstoff aus Methanol und Ammoniak unter den Bedingungen des sogenannten BMA-Verfahrens in einzelne Verfahrensschritte unterteilt, die nacheinander ablaufen, und zwar dergestalt, dass man Methanol in bekannter Weise der Zersetzungsreaktion zu Kohlenmonoxid und Wasserstoff unterwirft, das entstandene Gasgemisch aus Kohlenmonoxid und Wasserstoff durch Hinzufügen von zusätzlichem Wasserstoff auf ein $CO/H_2$-Verhältnis von 1 zu 2,5 bis 5, bevorzugt 1 zu 3, einstellt, dieses Gemisch in Gegenwart eines Katalysators in an sich bekannter Weise in Methan und Wasser umwandelt, beide Komponenten trennt und das nun vorliegende Methan unter Zusatz von Ammoniak den Bedingungen der BMA-Synthese in Gegenwart eines Platinkatalysators unterwirft, den entstandenen Cyanwasserstoff in an sich bekannter Weise aus dem entstandenen Gasgemisch abtrennt und den als Restgas anfallenden Wasserstoff vollständig oder teilweise in die zweite Verfahrensstufe zur Einstellung des notwendigen $CO/H_2$-Verhältnisses zurückführt.

** (CA, Bd. 91, 142 724 s ; 142 723 r ; CA, Bd. 90, 206 671 m)

Als Methanol wird bevorzugt technisches Methanol eingesetzt, da die handelsübliche Qualität frei von typischen Katalysatorgiften, wie Schwefelwasserstoff und Kohlendisulfid, ist. Falls gewünscht, kann natürlich auch reines Methanol verwendet werden.

Die Methanolzersetzung ist an sich bekannt und wird mit verschiedenartigen Katalysatoren, z. B. mit Zinkkatalysatoren, durchgeführt, siehe ULLMANN, loc. cit., 3. Auflage, 9. Band, Seite 681. Dabei entstehen Kohlenmonoxid und Wasserstoff im Molverhältnis 1 zu 2.

In der darauffolgenden zweiten Stufe wird unter Hinzufügen von weiterem Wasserstoff Methan durch katalytische Kohlenoxydhydrierung gewonnen, s. ULLMANN, loc. cit., Seite 684 und 685.

Durch die Möglichkeit, nach dieser Stufe das neben Methan gebildete Wasser abzutrennen, und das nun rein vorliegende Methan mit Ammoniak nach den Bedingungen des BMA-Verfahrens umzusetzen, wird jede Gefahr der Verseifung von gebildeter Blausäure vermieden. Gerade das trat aber in erheblichem Maße nach dem Verfahren der DE-C-11 43 497 ein.

Der bei der BMA-Synthese anfallende Wasserstoff wird — und das ist ein weiterer Vorteil des erfindungsgemäßen Verfahrens — entweder vollständig oder teilweise in der zweiten Verfahrensstufe, nämlich der Methanisierungsstufe, wieder verwendet.

Das erfindungsgemässe Verfahren liefert also den für das Verfahren notwendigen Wasserstoff selbst. Es ist auch durchaus möglich, den nach der BMA-Synthesestufe anfallenden Wasserstoff ganz oder teilweise vor der Methanolzersetzungsstufe in das System zurückzuführen.

Um möglichst wenig Modifizierungen an der letzten Verfahrensstufe, dem eigentlichen BMA-Verfahren, vornehmen zu müssen, sollte bei der Auswahl des Katalysators für die der BMA-Stufe vorangehenden beiden anderen Stufen und bei der Vielzahl der technisch für diese Reaktionen erprobten Katalysatoren nur solche ausgewählt werden, die ein einheitliches Produktspektrum, d. h. ein möglichst methanreiches Gasgemisch, liefern.

Dass hierfür schon relativ einfache Katalysatorsysteme in Frage kommen, zeigt die in den Beispielen getroffene Auswahl. Es wurden hier Ausbeuten bis maximal 87 % an Cyanwasserstoff erreicht — bezogen auf eingesetztes Methanol — d. h. die Umsetzungsrate von Methanol liegt durchaus in der gleichen Größenordnung wie beim konventionellen BMA-Verfahren unter Einsatz von Methan.

Die Leistungsfähigkeit der für die einzelnen Stufen einzusetzenden Katalysatoren lässt sich durch Vorversuche ermitteln.

Als günstig haben sich für die Methanolzersetzung Temperaturen von 150-600 °C und Drucke von 1-100 bar absolut erweisen, und zwar in Gegenwart von zinkhaltigen Katalysatoren, besonders von Katalysatoren, die im wesentlichen aus Kupfer-, Zink- und Chromoxiden, mit und ohne Trägermaterial, bestehen, siehe ULLMANN, Enzyklopädie der technischen Chemie, 3. Auflage, Band 9, Seite 681 ff.

Die Methanbildung aus Kohlenmonoxid und Wasserstoff lässt sich in geeigneter Weise an nickelhaltigen Katalysatoren, bevorzugt an Nickeloxiden auf Trägersubstanzen, wie Aluminiumoxid, Siliziumoxid oder Titanoxid mit oder ohne Promotermetallen, durchführen, s. ULLMANN, loc. cit., 4. Auflage, Band 14, Seite 329 ff. und « Rohstoff-Kohle », 1978, Verlag Chemie, Seiten 141-143.

Die Stufe des BMA-Verfahrens wird nach den hierfür üblichen Bedingungen betrieben, d. h., in hängenden Aluminiumoxidrohren, in deren Innern der Platinkatalysator aufgebracht ist, bei Temperaturen oberhalb 1 000 °C, s. ULLMANN, loc. cit., 3. Auflage, Band 5, Seite 636 und 637 ; 4. Auflage, Band 9, seite 659 : DECHEMA-Monografie, *1959*, Heft 33, Seiten 28-46.

Der technische Fortschritt des erfindungsgemäßen Verfahrens liegt einmal in der äußerst günstigen Kombination des BMA-Verfahrens mit den beiden vorausgehenden Stufen der Methanolzersetzung und Methangewinnung aus den Zersetzungsprodukten des Methanols, da im Gesamtverfahren Methan durch Methanol ersetzt wird und keine über das BMA-Verfahren hinausgehenden Rohstoffe mehr benötigt werden.

Auf Grund der handelsüblichen Qualität des Methanols ist das gewonnene $CO/H_2O$-Gemisch frei von Katalysatorgiften für die nachfolgenden Reaktionsstufen. Da es auch gelingt, nach dem Methanisierungsschritt die Abtrennung des gebildeten Wassers vom Methan in einfacher Weise, z. B. durch Kondensation, vornehmen zu können, ist die Gefahr der Verseifung im abschliessenden Cyanwasserstoff-Syntheseteil ausgeschlossen. Damit kann die technische Auslegung beim BMA-Verfahren in unveränderter Form übernommen werden, d. h., die sonst durch zusätzliche Inertgase notwendige Dimensionierung des Aufarbeitungsteils fällt fort ; ausserdem sind die an Cyanwasserstoff erhaltenen Ausbeuten den konventionellen Ausbeuten gleichrangig.

Da Methanol durch die rasch wachsende Chemie der Kohle ein äusserst zukunftsträchtiger Rohstoff ist, mit zusätzlich geringen Transport- und Lagerproblemen, bietet sich mit dem erfindungsgemässen Verfahren eine Blausäuresynthese an, die unabhängig von einer direkten Methanversorgung ist und damit auch an industriell weniger erschlossenen Standorten betrieben werden kann.

Die Erfindung wird in Abbildung 1 und an den nachfolgenden Beispielen näher erläutert :

In Abbildung 1 wird der Alkohol aus dem Vorratsgefäß 1 mittels der Dosierpumpe 2 über die Leitung 3 in den Reaktor 4 geführt, wo er zunächst verdampft und anschliessend zu Kohlenmonoxid und Wasserstoff zersetzt wird. Der Reaktor 4 besteht aus einem heizbaren Gefäß, in dessen Inneren der Katalysator gefüllt wird.

Über Leitung 5 gelangt das $CO/H_2$-Gasgemisch, nachdem es mit zusätzlichem Wasserstoff über Leitung 6a und Regelung 7 auf das richtige Verhältnis gebracht wurde, in den Reaktor 6, in dem die

Methanisierungsreaktion stattfindet. Der Reaktor 6 ist so ausgerüstet, dass er je nach Wahl beheizt bzw. gekühlt werden kann. In seinem Inneren befindet sich der Katalysator. Über Leitung 7 wird das entstandene Gasgemisch in den Kühler 8 geführt, in dem das mitgebildete Wasser von Methan abgetrennt und über 8a abgeführt wird. Das so erhaltene Methan wird über Leitung 10 bei 9 mit dem aus der Vorratsflasche 11 entnommene Ammoniak vermischt. Die Ammoniak-Mengenmessung erfolgt über den Rotameter 12. Anschliessend werden die Gase über Leitung 13 in den eigentlichen Blausäurereaktor 14 gebracht. Er besteht aus einem elektrisch beheizten Röhrenofen, in dessen Innerem sich ein keramisches Kontaktrohr 15 befindet, das mit dem BMA-Katalysator belegt ist.

Nach Reaktionsende werden die entstandenen Gase am Kühler 16 auf kurzem Wege auf Temperaturen unterhalb 100 °C gebracht und über Leitung 17 im Brenner 19 entsorgt.

Für eine analytische Auswertung und zur Gewinnung von wasserstoffreichem Restgas wird im Bypass über Leitung 18 das nichtumgesetzte Ammoniak in den Absorptionsvorlagen 20 aufgefangen und naßchemisch analysiert ; der gebildete Cyanwasserstoff wird in den mit Natronlauge gefüllten Absorptionsvorlagen 21 aufgefangen und ebenfalls in bekannter Weise naßchemisch analysiert. Über die Pumpe 25 und die Mengenmessung 22 erhält man das überwiegend aus Wasserstoff bestehende Restgas, das bei 23 entnommen oder bei z. B. 24 in die Synthese zurückgeführt werden kann.

An den Meßstellen 26 werden die Drücke der Gasleitungen überprüft, um Verstopfungen durch unerwünschte Nebenreaktionen, wie zum Beispiel Rußbildung, rechtzeitig erfassen zu können.

Die Katalysatoren für die beiden, der BMA-Reaktion vorgeschalteten Reaktoren werden beispielhaft in der nachfolgenden Weise hergestellt :

Katalysator 1 : (Methanolzersetzung)

11,84 g $Cu(NO_3)_2 \cdot 3\,H_2O$, 12,79 g $Zn\,(NO_3)_2 \cdot 6\,H_2O$ und 3,20 g $Cr(NO_3)_3 \cdot 9\,H_2O$ werden in 100 ml $H_2O$ gelöst. 200 g Molekularsieb 4 A mit Katalysatorlösung imprägniert und das Wasser im Vakuum entfernt. Anschließend bei 400 °C und $N_2$-Spülung behandelt und dann mit Wasserstoff reduziert.

Katalysator 2 : (Methanisierung)

In 250 ml einer wäßrigen Suspension von γ-Aluminiumoxid (30 Gewichtsprozent) werden 43,2 g $Ni(NO_3)_2 \cdot 6\,H_2O$, gelöst in 100 ml Wasser, eingebracht, innig vermischt und auf 60 °C erwärmt.

Ein Monolith (wie auch für Autoabgas-Katalysatoren verwendet) mit einem Durchmesser von 10 cm und einer Höhe von 15 cm wird mit der Suspension getränkt und bei 120 °C im Trockenschrank getrocknet. Anschliessend wird bei 300 °C im Wasserstoff-Strom ca. 2 Stunden reduziert.

Versuchsdurchführung :

Die Abtrennung des gebildeten Wassers vom Methan in der zweiten Reaktionsstufe erfolgte im Kühler 8 mit Wasser von 10 °C als Kühlmedium.

Die Ergebnisse der einzelnen Versuche bei verschiedenen Temperaturen in den Reaktoren 1 und 2, durchgeführt bei Atmosphärendruck, sind in der Tabelle 1 zusammengefasst. Die Ausbeuteangaben gelten für gebildete Blausäure, bezogen auf eingesetztes Methanol, bei einem Ausgangsverhältnis Methanol zu Ammoniak von 1 : 1,1, und einem Durchsatz von 1 Mol Alkohol pro Stunde. Das eingestellte Verhältnis CO zu $H_2$ vor dem Reaktor 6 betrug 1 : 3.

In der Tabelle 1 sind waagerecht die Temperaturen für den Zersetzungsreaktor 4, senkrecht für den Methanisierungsreaktor 6 angegeben. Für alle drei Reaktionsstufen zusammen ergibt sich die in der Tabelle angegebene Nettoausbeute, bezogen auf die formale Reaktionsgleichung — Zusammenfassung aller drei Reaktionsschritte — zu

$$CH_3OH + NH_3 \rightarrow HCN + H_2O + 2\,H_2 :$$

(Siehe Tabelle 1 Seite 5 f.)

Tabelle 1 Ausbeuten % HCN, bezogen auf eingesetztes Methanol

| $CH_4$-Bildungsreaktor 6 ↓ / $CH_3OH$-Zersetzungsreaktor 4 → | 450 °C | 500 °C | 550 °C |
|---|---|---|---|
| 350 °C | - | 37,62 | - |
| 400 °C | 64,35 | 60,54 | 71,94 |
| 450 °C | 87,01 | 74,78 | 75,65 |
| 500 °C | 82,25 | 78,38 | 75,94 |
| 550 °C | 86,60 | 80,84 | 75,14 |

**Ansprüche**

1. Verfahren zur Herstellung von Cyanwasserstoff nach den Bedingungen des BMA-(Blausäure-Methan-Ammoniak-) Verfahrens aus Methanol und Ammoniak, dadurch gekennzeichnet, dass man Methanol in bekannter Weise der Zersetzungsreaktion zu Kohlenmonoxid und Wasserstoff unterwirft, das entstandene Gasgemisch aus Kohlenmonoxid und Wasserstoff durch Hinzufügen von zusätzlichem Wasserstoff auf ein $CO/H_2$-Verhältnis von 1 zu 2,5 bis 5, bevorzugt 1 zu 3, einstellt, dieses Gemisch in Gegenwart eines Katalysators in an sich bekannter Weise in Methan und Wasser umwandelt, beide Komponenten trennt und das nun vorliegende Methan unter Zusatz von Ammoniak den Bedingungen der BMA-Synthese in Gegenwart eines Platinkatalysators unterwirft, den entstandenen Cyanwasserstoff in an sich bekannter Weise aus dem entstandenen Gasgemisch abtrennt und den als Restgas anfallenden Wasserstoff vollständig oder teilweise in die zweite Verfahrensstufe zur Einstellung des notwendigen $CO/H_2$-Verhältnisses zurückführt.

2. Verfahren nach Anspruch 1, dadurch gekennzeichnet, dass man die Methanolzersetzung bei Temperaturen von 150 bis 600 °C, Drucken von 1 bis 100 bar absolut und in Gegenwart eines zinkhaltigen, bevorzugt im wesentlichen aus Kupfer-, Zink- und Chromoxiden bestehenden Katalysators durchführt.

3. Verfahren nach Anspruch 1, dadurch gekennzeichnet, dass man die Methansynthese aus Kohlenmonoxid und Wasserstoff in Gegenwart eines nickelhaltigen Katalysators durchführt, der bevorzugt Nickeloxide und als Trägersubstanz Aluminiumoxid, Siliziumoxid oder Titanoxid, mit oder ohne Promotermetallen, enthält.

4. Verfahren nach Anspruch 1, dadurch gekennzeichnet, dass man die Synthese von Cyanwasserstoff aus Methan und Ammoniak und die Aufarbeitung des entstandenen Produktgases in bekannter Weise nach den Bedingungen des BMA-Verfahrens in Gegenwart eines Platinkatalysators durchführt.

**Claims**

1. Process for the production of hydrogen cyanide, under the conditions of the HMA-(hydrocyanic acid-methane-ammonia) process, from methanol and ammonia, characterised in that methanol is subjected in known manner to the decomposition reaction to produce carbon monoxide and hydrogen, the resulting gas mixture of carbon monoxide and hydrogen, is adjusted to a $CO/H_2$ ratio of 1 to from 2.5 to 5, preferably from 1 to 3 by addition of further hydrogen, this mixture is converted in known manner in

the presence of a catalyst to produce methane and water, both components are separated and the methane now present is subjected to the conditions of the HMA-synthesis in the presence of a platinum catalyst with addition of ammonia, the resulting hydrogen cyanide is separated in known manner from the gas mixture produced and the hydrogen which is produced as residual gas is completely or partially reintroduced into the second stage of the process to adjust the necessary $CO/H_2$ ratio.

2. Process according to claim 1, characterised in that the methanol decomposition is carried out at a temperature of from 150 to 600 °C, under a pressure of from 1 to 100 bars absolute and in the presence of a zinc-containing catalyst, preferably a catalyst substantially consisting of copper, zinc and chromium oxides.

3. Process according to claim 1, characterised in that the methane synthesis from carbon monoxide and hydrogen is carried out in the presence of a nickel-containing catalyst, which preferably contains nickel oxides and aluminium oxide, silicon oxide or titanium oxide as carrier, with or without promoter metals.

4. Process according to claim 1, characterised in that the hydrogen cyanide is synthesised from methane and ammonia and the resulting product gas is worked-up in known manner according to the conditions of the HMA-process in the presence of a platinum catalyst.

**Revendications**

1. Procédé de fabrication d'acide cyanhydrique dans les conditions du procédé BMA (acide cyanhydrique (Blausäure)-méthane-ammoniac), à partir de méthanol et d'ammoniac, procédé caractérisé en ce que le méthanol est soumis, de la manière connue, à la réaction de décomposition en monoxyde de carbone et hydrogène, que le mélange gazeux produit, composé de monoxyde de carbone et d'hydrogène est ajusté, par introduction supplémentaire d'hydrogène, à un rapport $CO/H_2$ de 1 pour 2,5 à 5, de préférence 1 pour 3, que ce mélange est transformé en présence d'un catalyseur, d'une manière connue, en méthane et eau, qu'on sépare les deux composants et que le méthane désormais disponible est soumis, sous addition d'ammoniac, aux conditions de la synthèse BMA en présence d'un catalyseur au platine, l'acide cyanhydrique produit est séparé du mélange gazeux formé de manière connue et l'hydrogène obtenu comme gaz résiduel est recyclé en totalité ou en partie dans la deuxième étape réactionnelle pour ajuster le rapport $CO/H_2$ à la valeur souhaitée.

2. Procédé selon la revendication 1, caractérisé en ce que la décomposition du méthanol est conduite à une température de 150 à 600 °C, sous une pression de 1 à 100 bars et en présence d'un catalyseur contenant du zinc, de préférence constitué d'oxydes de cuivre, de zinc et de chrome.

3. Procédé selon la revendication 1, caractérisé en ce que la synthèse du méthane à partir de monoxyde de carbone et d'hydrogène est effectuée en présence d'un catalyseur contenant du nickel, de préférence de l'oxyde de nickel et un support, de préférence de l'oxyde d'aluminium, de l'oxyde de silicium ou de l'oxyde de titane, avec ou sans métaux promoteurs.

4. Procédé selon la revendication 1, caractérisé en ce que la synthèse de l'acide cyanhydrique à partir de méthane et d'ammoniac et le traitement du gaz produit sont effectués de manière connue en soi dans les conditions du procédé BMA, en présence d'un catalyseur au platine.

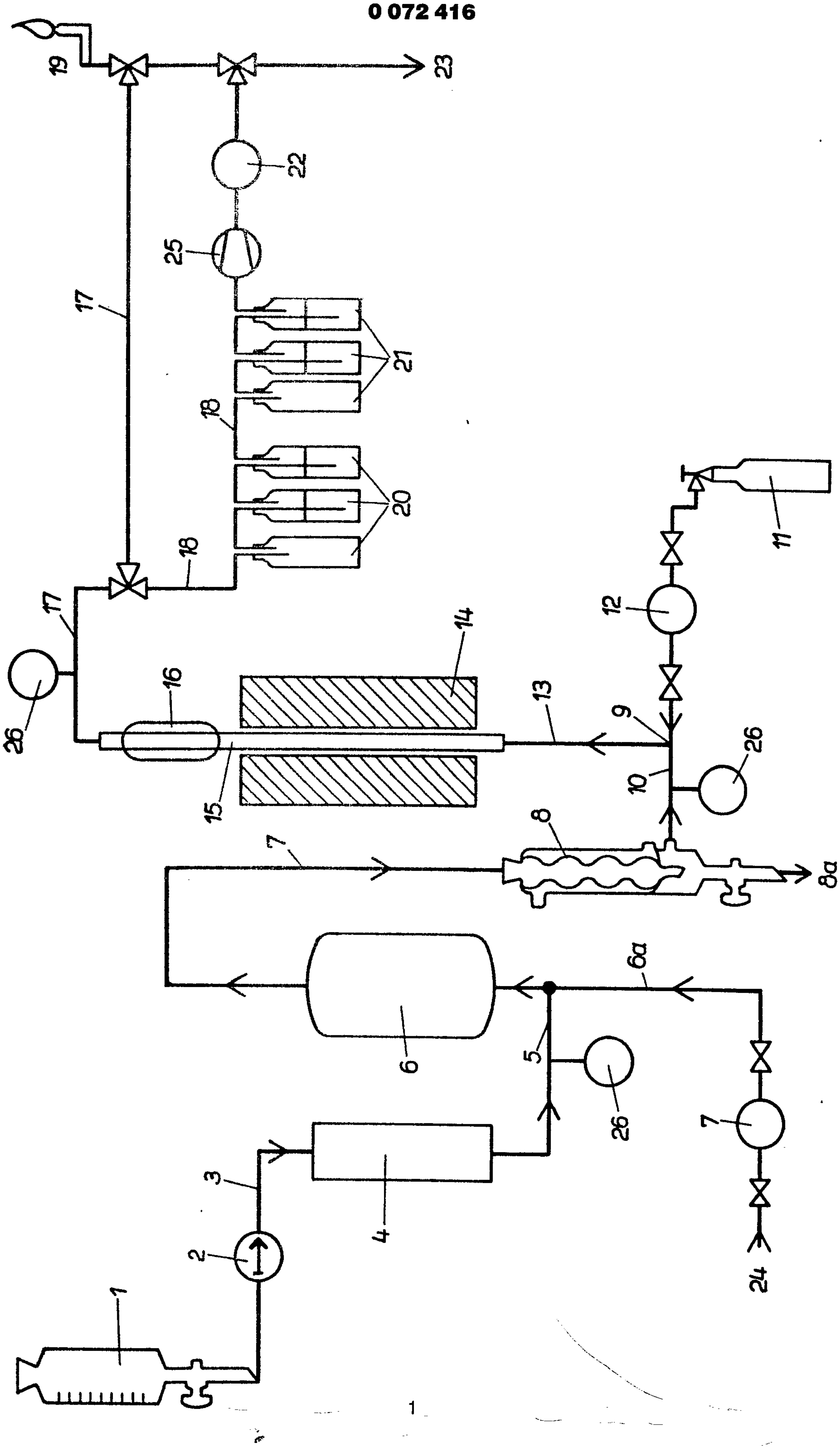
1
2
3
4
5
6
6a
7
8
8a
9
10
11
12
13
14
15
16
17
18
19
20
21
22
23
24
25
26